# DEMANDE DE BREVET EUROPEEN

(11) **EP 4 712 329 A1**
(43) Date de publication de la demande: **18.03.2026**
(21) Numéro de dépôt: 25200596.2
(22) Date de dépôt: 05.09.2025
(51) Int. Cl.: H02M 3/156, H02M 3/158, H02M 1/00

(54) **ALIMENTATION A DECOUPAGE DE TYPE ABAISSEUR DE TENSION**

(30) Priorité: 12.09.2024 FR 2409717
(71) Demandeur: STMicroelectronics International N.V., 1228 Plan-les-Ouates, Geneva (CH)
(72) Inventeur: FELTRIN, Eric, 38000 GRENOBLE (FR); CHESNEAU, David, 38000 GRENOBLE (FR); ESCH, Hélène, 38170 SEYSSINET PARISET (FR)
(74) Mandataire: Cabinet Beaumont

(57) **Abrégé**

La présente description concerne une alimentation à découpage (100) de type abaisseur de tension comportant :
- une cellule de commutation (101) comprenant un premier commutateur (102, 104) configuré pour être périodiquement mis à l'état passant par un premier signal de commande modulé par une modulation de type modulation en largeur d'impulsion ou en fréquence d'impulsion ;
- un amplificateur (114) configuré pour générer une tension d'erreur représentative d'une différence entre une tension de référence et une tension de sortie de l'alimentation destinées à être appliquées en entrée de l'amplificateur (114) ;
- un circuit de retard (126) configuré pour appliquer sur le premier signal de commande un retard réduisant un écart entre la tension d'erreur et la tension de référence ;
- un circuit de modulation de retard (130) configuré pour moduler la valeur du retard en fonction d'une différence entre la tension d'erreur et la tension de référence.

## Description

### Domaine technique

La présente description concerne de façon générale le domaine des alimentations à découpage (« Switched Mode Power Supply » en anglais, ou SMPS), notamment celui des convertisseurs DC-DC, ou continu - continu, et plus particulièrement les alimentations à découpage de type abaisseur de tension (également appelées convertisseurs Buck, ou hacheur série).

### Technique antérieure

Une alimentation à découpage de type abaisseur de tension comprend généralement une cellule de commutation comprenant un premier transistor dit « côté haut » (« high side » en anglais) et un deuxième transistor dit « côté bas » (« low side » en anglais) couplés en série entre un potentiel électrique d'entrée et la masse. Les premier et deuxième transistors, de types complémentaires (l'un de type n et l'autre de type p) sont alternativement mis à l'état passant et à l'état bloqué, de manière complémentaire (l'un est à l'état passant pendant que l'autre est à l'état bloqué), par des premier et deuxième signaux de commande complémentaires appliqués sur leur grille. Un filtre passe-bas LC est couplé au nœud de connexion de cette cellule, c'est-à-dire au point de connexion auquel sont couplés les deux transistors. La tension de sortie de l'alimentation est obtenue aux bornes du condensateur du filtre.

Les signaux de commande appliqués sur les transistors sont modulés soit en largeur d'impulsion (« Pulse Width Modulation » en anglais, ou PWM), soit en fréquence d'impulsion (« Pulse Frequency Modulation » en anglais, ou PFM). Le niveau de la tension de sortie obtenue est fonction de la durée des états passant et bloqué des transistors au cours d'une période des signaux de commande. Les paramètres de la modulation de ces signaux de commande définissent le rapport de conversion de l'alimentation.

En présence d'une forte charge couplée en sortie de l'alimentation, un important courant de sortie est requis. L'alimentation fonctionne dans ce cas avec des signaux de commande des transistors de la cellule de commutation modulés de type PWM, et la fréquence de ces signaux de commande est alors fixe. L'alimentation comporte un circuit générant une tension d'erreur dont la valeur dépend de la différence entre la valeur de la tension de sortie et celle d'une tension de référence correspondant à la valeur cible de la tension de sortie, et un autre circuit générant une tension de rampe qui croît à partir de zéro et qui, en atteignant la valeur de la tension d'erreur, défini la durée d'un premier état des signaux de commande pendant laquelle la cellule de commutation charge le condensateur couplé au nœud de connexion de la cellule de commutation.

En présence d'une faible charge couplée en sortie de l'alimentation, un faible courant de sortie est requis. L'alimentation fonctionne alors avec des signaux de commande des transistors de la cellule de commutation modulés de type PFM.

Dans une telle alimentation à découpage, la tension de sortie de l'alimentation fluctue fortement lors d'un changement de la modulation des signaux de commande (passage entre les modulations PWM et PFM) si, au moment de ce changement, la tension d'erreur et la tension de référence ne sont pas égales.

Pour éviter ce problème, le document EP 3 644 486 A1 propose d'introduire un retard modifiant la valeur de la tension d'erreur afin de réduire l'écart entre la valeur de la tension d'erreur et celle de la tension de référence. Ce retard est défini comme étant égal au temps de propagation du comparateur de la tension d'erreur avec la tension de rampe. Ce retard force la boucle de régulation de l'alimentation à augmenter artificiellement la tension d'erreur pour obtenir le même rapport cyclique permettant à la tension d'erreur de se rapprocher de la tension de référence, et améliorer ainsi les transitions entre les modulations PWM et PFM.

Un inconvénient à la solution proposée dans le document mentionné ci-dessus est que la valeur maximale du rapport cyclique obtenue pour la modulation PWM se trouve limitée par l'introduction de ce retard, pouvant conduire à des performances limitées de l'alimentation.

### Résumé de l'invention

Il existe un besoin de proposer une solution ne présentant pas au moins une partie des inconvénients des solutions existantes.

Un mode de réalisation pallie tout ou partie des inconvénients des solutions connues et propose une alimentation à découpage de type abaisseur de tension comportant au moins :
- une cellule de commutation comprenant au moins un premier commutateur configuré pour être périodiquement mis à l'état passant par un premier signal de commande modulé par une modulation de type modulation en largeur d'impulsion, PWM, ou modulation en fréquence d'impulsion, PFM ;
- un amplificateur configuré pour générer une tension d'erreur représentative d'une différence entre une tension de référence et une tension de sortie de l'alimentation destinées à être appliquées en entrée de l'amplificateur ;
- un circuit de retard configuré pour appliquer sur le premier signal de commande un retard réduisant un écart entre la tension d'erreur et la tension de référence ;
- un circuit de modulation de retard configuré pour moduler la valeur du retard en fonction d'une différence entre la tension d'erreur et la tension de référence.

Selon un mode de réalisation particulier, le circuit de modulation de retard est configuré pour délivrer en sortie un courant ou une tension dont la valeur est proportionnelle à la différence entre la tension d'erreur et la tension de référence.

Selon un mode de réalisation particulier, le circuit de modulation de retard est configuré pour réduire la valeur du retard proportionnellement à la valeur de la différence entre la tension d'erreur et la tension de référence.

Selon un mode de réalisation particulier, le circuit de modulation de retard comporte au moins un amplificateur différentiel comprenant une entrée non inverseuse configurée pour recevoir la tension d'erreur et une entrée inverseuse configurée pour recevoir la tension de référence.

Selon un mode de réalisation particulier, la cellule de commutation comporte au moins un deuxième commutateur configuré pour être périodiquement mis à l'état passant par un deuxième signal de commande modulé par une modulation de type PWM ou PFM, de manière complémentaire du premier commutateur.

Selon un mode de réalisation particulier, l'alimentation à découpage comporte en outre au moins un élément inductif comprenant un première électrode couplée à un nœud de connexion de la cellule de commutation, et au moins un élément capacitif couplé à une deuxième électrode de l'élément inductif et aux bornes duquel la tension de sortie de l'alimentation est destinée à être obtenue.

Selon un mode de réalisation particulier, l'alimentation à découpage comporte en outre au moins un comparateur configuré pour recevoir en entrée la tension d'erreur et une rampe de tension périodique croissante pendant une période du premier signal de commande.

Selon un mode de réalisation particulier, l'alimentation à découpage comporte en outre au moins un circuit de génération de signal de commande configuré pour générer au moins le premier signal de commande à partie du signal de sortie du comparateur et d'un signal de sortie du circuit de retard.

Selon un mode de réalisation particulier, l'alimentation à découpage comporte en outre un circuit de génération de rampe de tension configuré pour générer la tension de rampe et dont la sortie est couplée à une entrée non inverseuse du comparateur.

Selon un mode de réalisation particulier, l'alimentation à découpage comporte en outre un circuit de génération de signal périodique configuré pour délivrer en entrée du circuit de retard et du circuit de génération de rampe de tension un signal périodique de fréquence égale à une fréquence du premier signal de commande.

Selon un mode de réalisation particulier, le circuit de retard comporte au moins :
- un inverseur CMOS configuré pour recevoir en entrée le signal périodique délivré par le circuit de génération de signal périodique ;
- une capacité couplée à une borne de sortie de l'inverseur ;
- une bascule de Schmitt comprenant une entrée couplée à la borne de sortie de l'inverseur et dont une sortie forme une sortie du circuit de retard ;
- un transistor MOS configuré pour délivrer en sortie un courant de valeur maximale inférieure à celle des transistors de l'inverseur, et couplé en série à l'un des transistors de l'inverseur ;
- une source de courant configurée pour prélever, sur un nœud de connexion entre le transistor MOS et l'inverseur, le courant dont la valeur est proportionnelle à la différence entre la tension d'erreur et la tension de référence.

Il est également proposé un procédé de conversion d'une tension d'entrée en une tension de sortie dont la valeur est inférieure à celle de la tension d'entrée, comprenant au moins :
- commande d'au moins une cellule de commutation comprenant au moins un premier commutateur périodiquement mis à l'état passant par un premier signal de commande modulé par une modulation de type modulation en largeur d'impulsion, PWM, ou modulation en fréquence d'impulsion, PFM ;
- génération d'une tension d'erreur représentative d'une différence entre une tension de référence et une tension de sortie de l'alimentation ;
- génération d'un retard réduisant un écart entre la tension d'erreur et la tension de référence ;
- modulation de la valeur du retard en fonction d'une différence entre la tension d'erreur et la tension de référence ;
- application du retard modulé sur le premier signal de commande.

Selon un mode de réalisation particulier, la modulation de la valeur du retard comporte la génération d'un courant ou d'une tension dont la valeur est proportionnelle à la différence entre la tension d'erreur et la tension de référence.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
- la figure 1 représente schématiquement une alimentation à découpage selon un mode de réalisation particulier ;
- la figure 2 représente schématiquement un exemple de réalisation d'un circuit de génération de rampe de tension d'une alimentation à découpage selon un mode de réalisation particulier ;
- la figure 3 représente schématiquement un exemple de réalisation d'un circuit de retard d'une alimentation à découpage selon un mode de réalisation particulier ;
- la figure 4 représente schématiquement un exemple de réalisation d'un circuit de modulation de retard d'une alimentation à découpage selon un mode de réalisation particulier ;
- la figure 5 représente un exemple de courant de sortie d'un circuit de modulation de retard d'une alimentation à découpage selon un mode de réalisation ;
- la figure 6 représente des exemples de signaux obtenus dans une alimentation à découpage selon un mode de réalisation particulier.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des exemples de réalisation décrits ont été représentés et sont détaillés. En particulier, la réalisation de différents éléments et composants de l'alimentation à découpage n'est pas détaillée. L'homme du métier sera capable de réaliser de manière détaillée ces éléments à partir de la description donnée ici.

Sauf précision contraire, lorsque l'on fait référence à deux éléments connectés entre eux, cela signifie directement connectés sans éléments intermédiaires autres que des conducteurs, et lorsque l'on fait référence à deux éléments reliés ou couplés (en anglais "coupled") entre eux, cela signifie que ces deux éléments peuvent être connectés ou être reliés par l'intermédiaire d'un ou plusieurs autres éléments. De plus, le terme « couplé » est utilisé ici pour désigner un couplage électrique entre plusieurs éléments (composants, circuits, etc.) électriques et/ou électroniques.

Sauf précision contraire, les expressions "environ", "approximativement", "sensiblement", et "de l'ordre de" signifient à 10 % près, de préférence à 5 % près. De même, sauf indication contraire, les gammes de valeurs indiquées incluent les bornes de ces gammes.

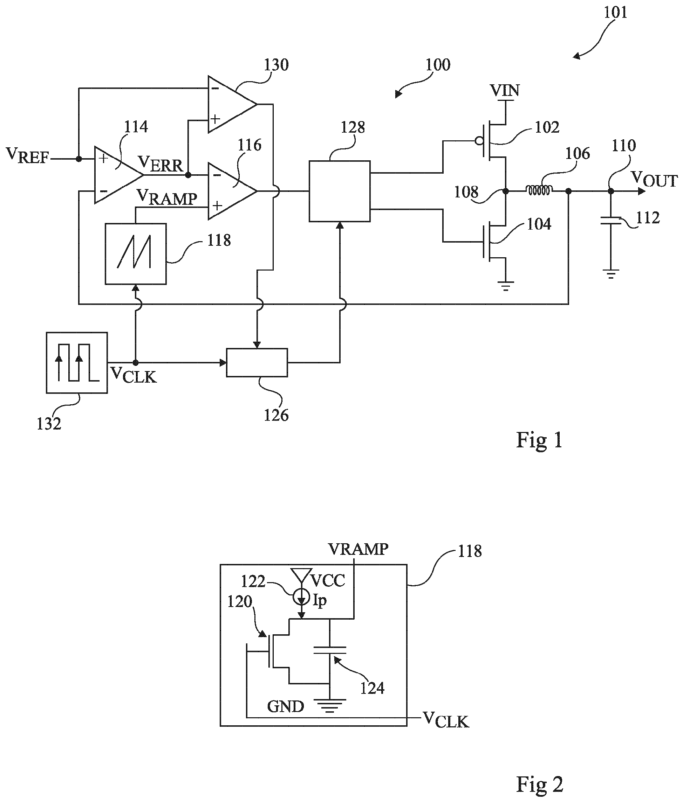

Une alimentation à découpage 100 selon un mode de réalisation particulier est décrite ci-dessous en lien avec la figure 1. Une partie seulement des éléments, circuits et composants de l'alimentation 100 sont décrits ci-dessous et visibles sur la figure 1, l'alimentation 100 pouvant comporter d'autres éléments, circuits et composants électriques ou électroniques.

L'alimentation 100 correspond à une alimentation à découpage de type abaisseur de tension, c'est-à-dire correspond à un convertisseur Buck.

Dans l'exemple décrit sur la figure 1, l'alimentation 100 comporte une cellule de commutation 101 comprenant un premier transistor de puissance 102 et un deuxième transistor de puissance 104. Les deux transistors 102, 104 sont de types opposés, l'un de type n et l'autre de type p. Sur l'exemple de la figure 1, le premier transistor 102 correspond à un transistor PMOS et le deuxième transistor 104 correspond à un transistor NMOS.

En variante, la cellule de commutation 101 peut comporter des commutateurs autres que des transistors MOS (IGBT, transistor bipolaire, etc.). En outre, un des deux commutateurs de la cellule de commutation 101 peut être remplacé par une diode.

Les transistors 102 et 104 sont couplés en série entre un potentiel électrique d'entrée de l'alimentation 100 et la masse, formant une tension d'entrée V_{IN} appliquée aux bornes de la cellule de commutation 101.

Dans l'exemple de réalisation décrit, des premier et deuxième signaux de commande sont destinés à être appliqués sur les grilles des transistors 102, 104 (premier signal de commande destiné à être appliqué sur la grille du premier transistor 102, et deuxième signal de commande destiné à être appliqué sur la grille du deuxième transistor 104), et ainsi commander la commutation de la cellule 101. Lors du fonctionnement de l'alimentation 100, les transistors 102, 104 sont destinés à être dans des états complémentaires (l'un des deux transistors 102, 104 est passant, l'autre des deux transistors 102, 104 est bloqué) lorsqu'ils sont commandés par des signaux de commande modulés par une modulation de type PWM. Lors de l'utilisation d'une modulation de type PFM, les transistors 102, 104 peuvent se trouver tous les deux à l'état bloqué.

Sur l'exemple de la figure 1, l'alimentation 100 comporte en outre un élément inductif 106, comprenant par exemple une inductance, dotée d'une première électrode couplée à un nœud de connexion 108 de la cellule de commutation 101 (nœud auquel les deux transistors 102, 104 sont couplés), et d'une deuxième électrode couplée à une borne de sortie 110 de l'alimentation 100 sur laquelle un courant de sortie de l'alimentation 100 est destiné à être obtenu.

Sur l'exemple de la figure 1, l'alimentation 100 comporte en outre un élément capacitif 112, comprenant par exemple un condensateur, couplé entre la borne de sortie 110 et la masse, et aux bornes duquel une tension de sortie V_{OUT} est destinée à être obtenue. L'élément capacitif 112 forme, avec l'élément inductif 106, un filtre passe-bas.

Dans le mode de réalisation particulier décrit, l'alimentation 100 comporte également un amplificateur 114 configuré pour générer une tension d'erreur V_{ERR} représentative d'une différence entre une tension de référence V_{REF} et la tension de sortie V_{OUT}. Dans cet exemple, l'amplificateur 114 comporte un intégrateur doté d'une fonction de correction pour stabiliser la boucle de régulation de l'alimentation 100. Sur l'exemple de la figure 1, la tension de référence V_{REF} est destinée à être appliquée sur une entrée non inverseuse de l'amplificateur 114, et la tension de sortie V_{OUT} est destinée à être appliquée sur une entrée inverseuse de l'amplificateur 114. La tension d'erreur V_{ERR} obtenue en sortie de l'amplificateur 114 correspond à une tension continue centrée sur la tension de référence, de valeur inférieure à celle de la tension de référence V_{REF} lorsque la valeur de la tension de référence V_{REF} est inférieure à celle de la tension de sortie V_{OUT}, et de valeur supérieure à celle de la tension de référence V_{REF} lorsque la valeur de la tension de référence V_{REF} est supérieure à celle de la tension de sortie V_{OUT}.

La valeur de la tension de référence V_{REF} destinée à être appliquée en entrée de l'amplificateur 114 est ici choisie comme étant égale à la valeur cible de la tension de sortie V_{OUT}. Par exemple, la tension d'entrée V_{IN} peut être égale à 3 V, et la tension de sortie V_{OUT} (et donc également la tension de référence V_{REF}) peut être égale à 1V**.** Dans cet exemple, le rapport de conversion de l'alimentation 100 est de 1/3.

Sur l'exemple de la figure 1, l'alimentation 100 comporte également un comparateur 116 comprenant une entrée inverseuse couplée à la sortie de l'amplificateur 114, c'est-à-dire sur laquelle la tension d'erreur V_{ERR} est destinée à être appliquée, et une entrée non inverseuse sur laquelle une rampe de tension périodique V_{RAMP}, obtenue en sortie d'un circuit de génération de rampe de tension 118, est destinée à être appliquée. La tension obtenue en sortie du comparateur 116 correspond à un signal carré ayant une première valeur (correspondant à un état bas dans l'exemple de la figure 1) lorsque la valeur de la rampe de tension périodique V_{RAMP} est inférieure à la tension d'erreur V_{ERR}, et une deuxième valeur (correspondant à un état haut dans l'exemple de la figure 1) lorsque la valeur de la rampe de tension périodique V_{RAMP} devient supérieure à la tension d'erreur V_{ERR}.

La durée de l'état bas du signal de sortie du comparateur 116 correspond donc à la durée pendant laquelle la valeur de la rampe de tension périodique V_{RAMP} croît jusqu'à atteindre la valeur de la tension d'erreur V_{ERR}. Or, étant donné que la tension d'erreur V_{ERR} est générée en fonction l'écart entre la tension de référence V_{REF} et la tension de sortie V_{OUT}, cette durée de l'état bas du signal de sortie du comparateur 116 est également en fonction de la différence de valeur entre la tension de référence V_{REF} et la tension de sortie V_{OUT}. Le signal de sortie du comparateur 116 est donc un signal carré périodique dont le rapport cyclique dépend de l'écart entre la tension de référence V_{REF} et la tension de sortie V_{OUT}.

Un exemple de réalisation du circuit de génération de rampe de tension périodique 118 est décrit ci-dessous en lien avec la figure 2.

Dans cet exemple, le circuit 118 comporte un transistor 120 (un transistor NMOS sur l'exemple de la figure 2). Un signal de commande de rampe V_{CLK}, correspondant ici à un signal carré destiné à être appliqué sur la grille du transistor 120. Le circuit 118 comporte également une source de courant 122 couplée entre un potentiel électrique d'alimentation VCC et le drain du transistor 120 et configurée pour délivrer un courant de polarisation Ip. Le circuit 118 comporte également un condensateur 124 destiné à être chargé par le courant de polarisation Ip et couplé entre le drain du transistor 120 et la masse. La rampe de tension périodique V_{RAMP} est destinée à être obtenue aux bornes du condensateur 124.

Dans l'exemple de réalisation du circuit 118 représenté sur la figure 2, lorsque le signal de commande de rampe V_{CLK} est dans un état bas (« 0 ») mettant le transistor 120 à l'état bloqué, le courant de polarisation Ip délivré par la source de courant 122 charge le condensateur 124, et la valeur de V_{RAMP} augmente alors linéairement. Lorsque le signal de commande de rampe passe dans un état haut (« 1 ») mettant le transistor 120 à l'état passant, la valeur de la rampe de tension périodique V_{RAMP} retombe à zéro. La période du signal de commande de rampe est égale à la période des signaux de commande destinés à être appliqués sur les grilles des transistors 102, 104.

D'autres variantes de réalisation du circuit de génération de rampe de tension 118 sont possibles.

L'alimentation 100 comporte également un circuit de retard 126 configuré pour introduire, dans les signaux de commande destinés à être appliqués aux grilles des transistors 102, 104 de la cellule 101, un retard réduisant un écart entre la tension d'erreur V_{ERR} et la tension de référence V_{REF}, lorsque ces signal de commande sont modulés par une modulation PWM pour faciliter le passage de l'une à l'autre des modulations PWM et PFM des signaux de commande.

Sur l'exemple de la figure 1, un signal d'horloge retardé est délivré en sortie du circuit de retard 126 et appliqué en entrée d'un circuit de génération de signal de commande 128. Le circuit 128 est configuré pour générer, à partir du signal délivré en sortie du comparateur 116 et du signal d'horloge retardé délivré en sortie du circuit de retard 126, les premier et deuxième signaux de commande destinés à être appliqués sur les grilles des transistors 102, 104 de la cellule 101. Par exemple, les premier et deuxième signaux de commande sont tels que le premier transistor 102 devient passant et le deuxième transistor 104 est bloqué lors du front montant du signal d'horloge retardé. Puis, lorsque le signal d'horloge retardé change d'état et présente un front descendant, le deuxième transistor 104 devient passant et le premier transistor 102 est bloqué.

Le circuit de commande 128 comporte par exemple un contrôleur numérique, par exemple du type automate à un nombre fini d'états (« Finite State Machine » en anglais, ou FSM). En variante, lorsque la cellule de commutation 101 ne comporte qu'un seul commutateur, le circuit 128 peut être configuré pour ne délivrer en sortie qu'un seul signal de commande.

L'alimentation 100 comporte également un circuit de modulation de retard 130 configuré pour moduler la valeur du retard défini dans le signal d'horloge retardé délivré par le circuit de retard 126 en fonction d'une différence entre la tension d'erreur V_{ERR} et la tension de référence V_{REF}. Dans l'exemple de réalisation représenté sur la figure 1, le circuit de modulation de retard 130 comporte un amplificateur différentiel comprenant une entrée non inverseuse sur laquelle la tension d'erreur V_{ERR} est destinée à être appliquée, et une entrée inverseuse sur laquelle la tension de référence V_{REF} est destinée à être appliquée. Dans cet exemple, un courant appelé Iadd dont la valeur est proportionnelle à la différence entre la valeur de la tension d'erreur V_{ERR} et celle de la tension de référence V_{REF} est obtenu en sortie du circuit de modulation de retard 130. En variante, le circuit de modulation de retard 130 pourrait délivrer en sortie une tension dont la valeur est proportionnelle à la différence entre la valeur de la tension d'erreur V_{ERR} et celle de la tension de référence V_{REF}.

Dans l'exemple de réalisation décrit, l'alimentation 100 comporte en outre un circuit 132 de génération de signal carré périodique configuré pour délivrer en sortie un signal carré périodique correspondant au signal de commande de rampe V_{CLK}. Sur l'exemple de la figure 1, le signal de commande de rampe V_{CLK} est également appliqué en entrée du circuit de retard 126.

Dans l'alimentation 100, les différents chemins parcourus par les différents signaux et tensions ont pour conséquence d'engendrer un décalage temporel entre la tension d'erreur V_{ERR} et la tension de référence V_{REF}. Dans l'exemple de réalisation décrit, ce décalage est dû notamment au comparateur 116 qui est composé de plusieurs transistors et qui engendre un temps de traitement relativement important par rapport à la période du signal carré périodique V_{CLK}. Il existe donc un certain temps de propagation des signaux entre l'entrée et la sortie du comparateur 116.

Pour pallier cet inconvénient, le circuit de retard 126 est configuré pour délivrer en sortie un signal d'horloge retardé d'un retard dont la valeur est comprise entre la valeur du temps de propagation des signaux dans le comparateur 116 et une valeur nulle, en fonction de la modulation du retard appliquée par la circuit de modulation de retard 130. Dans l'exemple décrit, le circuit de modulation de retard 130 est configuré pour réduire la valeur du retard proportionnellement à la valeur de la différence entre la tension d'erreur V_{ERR} et la tension de référence V_{REF}, et tel que la valeur du retard soit maximale lorsque la valeur de la tension d'erreur V_{ERR} est inférieure à celle de la tension de référence V_{REF}. La valeur du retard est réduite et tend vers zéro lorsque la valeur de la tension d'erreur V_{ERR} est égale à la tension de référence V_{REF}.

Par exemple, la valeur du temps de propagation des signaux dans le comparateur 116 peut être évaluée lors d'une phase d'étalonnage de l'alimentation 100. Le circuit de retard 126 peut alors être configuré de manière à appliquer par défaut un retard égal à la valeur du temps de propagation des signaux dans le comparateur 116, et le circuit de modulation de retard 130 applique alors sur ce retard un coefficient dont la valeur peut être comprise entre 0 et 1.

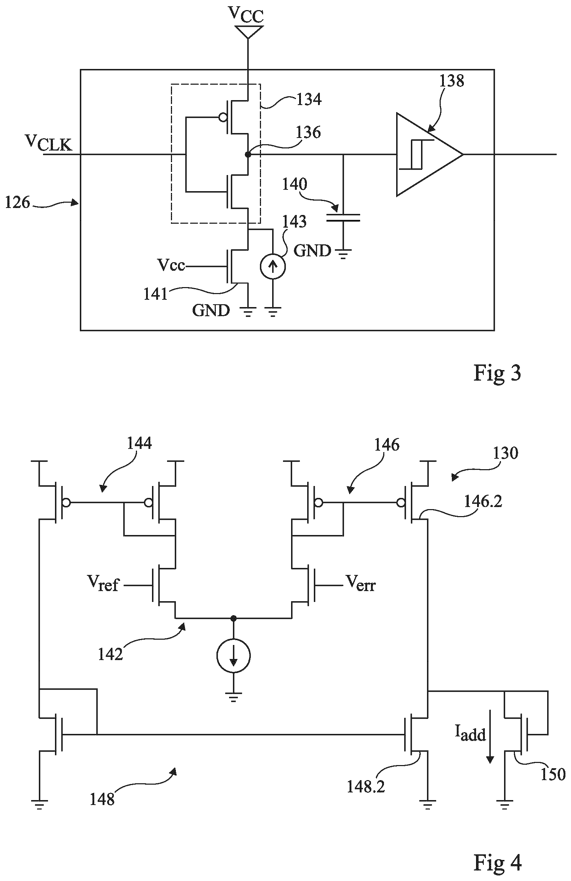

La figure 3 illustre schématiquement un exemple de réalisation du circuit de retard 126.

Dans cet exemple, le circuit de retard 126 comporte un inverseur 134 formé ici d'un transistor PMOS et d'un transistor NMOS couplés en série, entre le potentiel électrique d'alimentation VCC et la masse. Les grilles des transistors de l'inverseur 134 sont couplées conjointement de façon à former une borne d'entrée du circuit de retard 126 sur laquelle le signal de commande de rampe V_{CLK} est appliqué. De plus, un nœud 136 auquel les transistors de l'inverseur 134 sont couplés forme une borne de sortie de l'inverseur 134.

Sur l'exemple de la figure 3, le circuit de retard 126 comporte en outre une bascule de Schmitt 138 (« Schmitt Trigger » en anglais) dont l'entrée est couplée au nœud 136 et dont la sortie forme la sortie du circuit de retard 126 sur laquelle le signal d'horloge retardé est délivré. En outre, dans cet exemple, le circuit de retard 126 comporte une capacité 140 couplée entre le nœud 136 et la masse GND.

Le circuit de retard 126 comporte également un deuxième transistor 141, ici de type NMOS, comprenant une zone active de dimensions inférieures à celles du transistor NMOS de l'inverseur 134. Sur l'exemple de la figure 3, ce deuxième transistor 141 est couplé en série au transistor NMOS de l'inverseur 134. Le circuit de retard 126 comporte également une source de courant 143 prélevant le courant Iadd dont la valeur est proportionnelle à la différence entre la valeur de la tension d'erreur V_{ERR} et celle de la tension de référence V_{REF}. Cette source de courant 143 correspond par exemple à un transistor commandé pour prélever le courant Iadd. Dans cet exemple, si V_{CLK} est à l'état haut, la capacité 140 se décharge à travers le transistor NMOS de l'inverseur 134 et le deuxième transistor 141. Le deuxième transistor 141 étant de petites dimensions, la décharge de la capacité 140 est lente, ce qui créé un retard. Le courant Iadd s'ajoute au courant du transistor 141 pour accélérer la décharge de la capacité 140 à travers le transistors NMOS de l'inverseur 134. Si la valeur de la tension d'erreur V_{ERR} est égale ou proche de celle de la tension de référence V_{REF}, le retard obtenu est alors maximal car I_{add} est égal ou proche de 0. Si la valeur de la tension d'erreur V_{ERR} est très supérieure à celle de la tension de référence V_{REF}, le courant I_{add} est important et le retard obtenu est réduit compte tenu de l'accélération de la décharge de la capacité 140.

D'autres variantes de réalisation du circuit de retard 126 sont possibles. Par exemple, le circuit de retard 126 peut comporter une structure similaire à celle du comparateur 116 de manière à reproduire le temps de propagation des signaux dans ce comparateur.

Un exemple de réalisation d'un circuit de modulation de retard 130 est représenté schématiquement sur la figure 4.

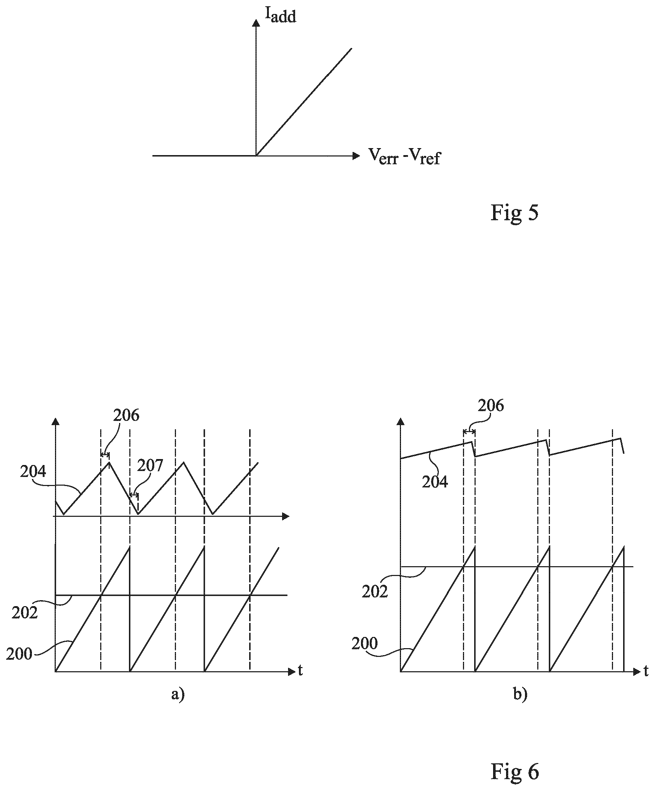

Sur la figure 4, le circuit de modulation de retard 130 comporte une paire différentielle 142, formée ici par deux transistors CMOS, sur laquelle sont appliqués les tensions V_{REF} et V_{ERR} sur les grilles des transistors. Le circuit de modulation de retard 130 représenté sur la figure 4 comporte en outre des miroirs de courant 144, 146 et 148 également réalisés avec des transistors CMOS. Dans cet exemple, plus la tension **d'erreur** V_{ERR} est élevée par rapport à la tension de référence V_{REF}, plus le transistor PMOS 146.2 du miroir de courant 146 fournit de courant et moins le transistor NMOS 148.2 consomme de courant. Le circuit de modulation de retard 130 comporte également un autre transistor MOS 150 couplé au transistor NMOS 148.2 du miroir de courant 148. La différence de courant entre celui fourni par le transistor PMOS 146.2 et celui consommé par le transistor NMOS 148.2 correspond au courant I_{add} traverssant le transistor 150 et correspond au courant servant à moduler la valeur du retard en fonction de la différence entre la tension d'erreur et la tension de référence. La figure 5 représente schématiquement le courant I_{add} obtenu avec un tel circuit de modulation de retard 130. Dans cet exemple, la valeur du courant I_{add} augmente linéairement proportionnellement à la valeur de la différence V_{ERR} - V_{REF}.

La figure 6 représente des exemples de signaux obtenus dans l'alimentation 100 avec un important courant de charge (schéma b) et avec un courant de charge faible ou nul (schéma a).

Sur le schéma a) de la figure 6, la référence 200 désigne la rampe de tension V_{RAMP} obtenue en sortie du circuit 118, la référence 202 désigne la valeur de la tension d'erreur V_{ERR} dans le cas d'une modulation PWM et celle de la tension de référence V_{REF} dans le cas d'une modulation PFM, et la référence 204 désigne le courant traversant l'élément inductif 106. Sur le schéma a), il est considéré que l'alimentation 100 ne fournit que très peu de courant en sortie ou que la tension d'alimentation V_{IN} est élevée. Ainsi, un premier délai 206 se retrouve entre le moment où la rampe de tension V_{RAMP} dépasse la valeur de la tension d'erreur V_{ERR} et le moment où la valeur du courant 204 arrête d'augmenter et commencer à diminuer, et un deuxième délai 207 se retrouve entre le signal d'horloge passe à la valeur haute, réinitialisant la rampe de tension V_{RAMP} à une valeur nulle et le moment où la valeur du courant 204 arrête de diminuer et augmente de nouveau. Le premier délai 206 est dû majoritairement au temps de réponse du comparateur 116, et le deuxième délai 207 est dû au retard introduit par le circuit de retard 126.

Sur le schéma b) de la figure 6, l'alimentation 100 fournit en sortie un courant important ou a une tension d'alimentation V_{IN} proche de la tension de sortie V_{OUT}. La valeur de la tension d'erreur V_{ERR} est donc plus importante que celle représentée sur le schéma a). Sur ce schéma b), le premier délai 206 se retrouve entre le moment où la rampe de tension V_{RAMP} dépasse la valeur de la tension d'erreur V_{ERR} et le moment où la valeur du courant 204 arrête d'augmenter et commencer à diminuer, mais le deuxième délai 207 observé sur le schéma a) ne se retrouve pas.

Dans le mode de réalisation particulier décrit, l'alimentation 100 fonctionne en boucle fermée et permet d'avoir si besoin une valeur importante de rapport cyclique d'un ou des signaux de commande du ou des commutateurs de la cellule de commutation de façon à rendre la tension de sortie V_{OUT} égale à la tension de référence V_{REF}, quelle que soit la valeur de la tension d'entrée V_{IN}.

En outre, dans l'exemple de réalisation décrit, l'alimentation 100 est configurée pour générer une rampe de tension V_{RAMP} contrôlée par un signal carré périodique. Cette rampe de tension V_{RAMP} est comparée avec la tension d'erreur V_{ERR}, et le ou les signaux de commande envoyés à la cellule de commutation 101 sont générés à partir de cette comparaison de façon à rendre la tension de sortie V_{OUT} égale à la tension de référence V_{REF}.

Cependant, à cause du temps de propagation intrinsèque des signaux, en particulier à l'intérieur du comparateur 116, le rapport cyclique obtenu en sortie du comparateur 116 est supérieur à celui obtenu théoriquement, et correspond au temps de montée de la rampe de tension V_{RAMP} à partir de la tension d'erreur V_{ERR}. La tension d'erreur V_{ERR} a tendance à diminuer afin que la rampe de tension V_{RAMP} atteigne la valeur de la tension d'erreur V_{ERR} plus tôt que dans le cas idéal d'une alimentation sans temps de propagation intrinsèque afin de compenser ce délai.

Sans correction induite par le retard généré, la boucle de régulation de l'alimentation 100 aurait tendance à réduire la tension d'erreur V_{ERR} pour atteindre la valeur du rapport cyclique nécessaire à la régulation de la tension de sortie V_{OUT}. Il y a donc un écart entre la tension d'erreur V_{ERR} et la tension de référence V_{REF} en fonction notamment de la tension d'entrée V_{IN}.

Le fait d'appliquer le retard sur le ou les signaux de commande de la cellule de commutation 101 lorsque l'alimentation 100 permet avantageusement un démarrage de la génération de la rampe de tension avant la mise en conduction du commutateur ou d'un des commutateurs de la cellule 101 par le ou l'un des signaux de commande de façon à compenser ledit temps de propagation intrinsèque aux circuits de l'alimentation 100 et réduire l'écart entre la tension d'erreur V_{ERR} et la tension de référence V_{REF}, et une diminution voire une élimination de l'influence de la tension d'entrée V_{IN} sur la qualité des transitions entre les modulations PWM et PFM. Ces transitions entre les modulations PWM et PFM deviennent plus stables et entraînent moins d'oscillations sur la tension de sortie V_{OUT}.

Dans l'alimentation 100 proposée, le retard appliqué sur le ou les signaux de commande de la cellule de commutation 101 diminue avec la valeur de la différence entre la tension d'erreur V_{ERR} et la tension de référence V_{REF}, ce qui permet d'avoir si besoin un grand rapport cyclique du ou des signaux de commande, et donc d'aboutir à de meilleures performances de l'alimentation 100, et cela sans impacter la bande passante de l'alimentation 100.

L'alimentation 100 peut par exemple être destinée à l'industrie automobile, en particulier pour les véhicules électriques.

L'alimentation 100 peut par exemple être utilisée dans le domaine industriel, par exemple pour le développement des énergies vertes ou pour l'électrification d'infrastructures, par exemple pour des bornes de recharge ou pour l'incorporation d'énergie solaire. Le dispositif peut également être utilisé dans le domaine de l'internet des objets et des maisons intelligentes. Le dispositif est par exemple destiné à être mis en œuvre dans les circuits de puissance et d'énergie d'équipements.

Divers modes de réalisation et variantes ont été décrits. La personne du métier comprendra que certaines caractéristiques de ces divers modes de réalisation et variantes pourraient être combinées, et d'autres variantes apparaîtront à la personne du métier.

Enfin, la mise en œuvre pratique des modes de réalisation et variantes décrits est à la portée de la personne du métier à partir des indications fonctionnelles données ci-dessus.

## Revendications

1. Alimentation à découpage (100) de type abaisseur de tension comportant au moins :
- une cellule de commutation (101) comprenant au moins un premier commutateur (102, 104) configuré pour être périodiquement mis à l'état passant par un premier signal de commande modulé par une modulation de type modulation en largeur d'impulsion, PWM, ou modulation en fréquence d'impulsion, PFM ;
- un amplificateur (114) configuré pour générer une tension d'erreur représentative d'une différence entre une tension de référence et une tension de sortie de l'alimentation (100) destinées à être appliquées en entrée de l'amplificateur (114) ;
- un circuit de retard (126) configuré pour appliquer sur le premier signal de commande un retard réduisant un écart entre la tension d'erreur et la tension de référence ;
- un circuit de modulation de retard (130) configuré pour moduler la valeur du retard en fonction d'une différence entre la tension d'erreur et la tension de référence.

2. Alimentation à découpage (100) selon la revendication 1, dans lequel le circuit de modulation de retard (130) est configuré pour délivrer en sortie un courant ou une tension dont la valeur est proportionnelle à la différence entre la tension d'erreur et la tension de référence.

3. Alimentation à découpage (100) selon l'une quelconque des revendications précédentes, dans lequel le circuit de modulation de retard (130) est configuré pour réduire la valeur du retard proportionnellement à la valeur de la différence entre la tension d'erreur et la tension de référence.

4. Alimentation à découpage (100) selon l'une quelconque des revendications précédentes, dans lequel le circuit de modulation de retard (130) comporte au moins un amplificateur différentiel comprenant une entrée non inverseuse configurée pour recevoir la tension d'erreur et une entrée inverseuse configurée pour recevoir la tension de référence.

5. Alimentation à découpage (100) selon l'une quelconque des revendications précédentes, dans lequel la cellule de commutation comporte au moins un deuxième commutateur (102, 104) configuré pour être périodiquement mis à l'état passant par un deuxième signal de commande modulé par une modulation de type PWM ou PFM, de manière complémentaire du premier commutateur (102, 104).

6. Alimentation à découpage (100) selon l'une quelconque des revendications précédentes, comportant en outre au moins un élément inductif (106) comprenant un première électrode couplée à un nœud de connexion (108) de la cellule de commutation (101), et au moins un élément capacitif (112) couplé à une deuxième électrode de l'élément inductif (106) et aux bornes duquel la tension de sortie de l'alimentation (100) est destinée à être obtenue.

7. Alimentation à découpage (100) selon l'une quelconque des revendications précédentes, comportant en outre au moins un comparateur (116) configuré pour recevoir en entrée la tension d'erreur et une rampe de tension périodique croissante pendant une période du premier signal de commande.

8. Alimentation à découpage (100) selon la revendication 7, comportant en outre au moins un circuit de génération de signal de commande (128) configuré pour générer au moins le premier signal de commande à partie du signal de sortie du comparateur (116) et d'un signal de sortie du circuit de retard (126).

9. Alimentation à découpage (100) selon la revendication 7 ou 8, comportant en outre un circuit de génération de rampe de tension (118) configuré pour générer la tension de rampe et dont la sortie est couplée à une entrée non inverseuse du comparateur (116).

10. Alimentation à découpage (100) selon l'une quelconque des revendications 7 à 9, comportant en outre un circuit de génération de signal périodique (132) configuré pour délivrer en entrée du circuit de retard (126) et du circuit de génération de rampe de tension (118) un signal périodique de fréquence égale à une fréquence du premier signal de commande.

11. Alimentation à découpage (100) selon les revendications 2 et 10, dans lequel le circuit de retard (126) comporte au moins :
- un inverseur (134) CMOS configuré pour recevoir en entrée le signal périodique délivré par le circuit de génération de signal périodique (132) ;
- une capacité (140) couplée à une borne de sortie de l'inverseur (134) ;
- une bascule de Schmitt (138) comprenant une entrée couplée à la borne de sortie de l'inverseur (134) et dont une sortie forme une sortie du circuit de retard (126) ;
- un transistor MOS (141) configuré pour délivrer en sortie un courant de valeur maximale inférieure à celle des transistors de l'inverseur (134), et couplé en série à l'un des transistors de l'inverseur (134) ;
- une source de courant (143) configurée pour prélever, sur un nœud de connexion entre le transistor MOS (141) et l'inverseur (134), le courant dont la valeur est proportionnelle à la différence entre la tension d'erreur et la tension de référence.

12. Procédé de conversion d'une tension d'entrée en une tension de sortie dont la valeur est inférieure à celle de la tension d'entrée, comprenant au moins :
- commande d'au moins une cellule de commutation (101) comprenant au moins un premier commutateur (102, 104) périodiquement mis à l'état passant par un premier signal de commande modulé par une modulation de type modulation en largeur d'impulsion, PWM, ou modulation en fréquence d'impulsion, PFM ;
- génération d'une tension d'erreur représentative d'une différence entre une tension de référence et une tension de sortie de l'alimentation (100) ;
- génération d'un retard réduisant un écart entre la tension d'erreur et la tension de référence ;
- modulation de la valeur du retard en fonction d'une différence entre la tension d'erreur et la tension de référence ;
- application du retard modulé sur le premier signal de commande.

13. Procédé de conversion selon la revendication 12, dans lequel la modulation de la valeur du retard comporte la génération d'un courant ou d'une tension dont la valeur est proportionnelle à la différence entre la tension d'erreur et la tension de référence.
